# EUROPEAN PATENT APPLICATION

(11) **EP 0 996 017 A2**
(43) Date of publication of application: **26.04.2000**
(21) Application number: 99308355.9
(22) Date of filing: 22.10.1999
(51) Int. Cl.: G02B 6/44

(54) **Storage tray for optical fibre cable joints**

(30) Priority: 22.10.1998 GB 9823017
(71) Applicant: BOWTHORPE PLC, Crawley, West Sussex RH10 2NZ (GB)
(72) Inventor: Foss, Raymond Charles, Peverell, Plymouth PL3 4NX (GB)
(74) Representative: Evans, Huw David Duncan

(57) **Abstract**

A storage tray for an optical fibre cable joint enclosure has a plurality ports Al, A2, B1, B2 for the entry into the tray of optical fibres, the or each port being in the form of a U-shaped channel and being provided with a seperate retaining member 20 of resilient material which is formed with a through-passage to receive optical fibres, the retaining member being insertable into the or each U-shaped channel as an interference fit.

The retaining members are easily inserted into the U-shaped channel via the open top of the latter and are correspondingly easy to remove. The arrangement accordingly facilitates the easy removal or introduction of optical fibres relative to the tray.

## Description

The present invention relates to enclosures for joints between optical fibre cables, and more particularly to arrangements for retaining optical fibres or groups of optical fibres in splice storage trays of such enclosures.

It is common for optical fibre cable joint enclosures to comprise a plurality of trays to receive splices between individual fibres. When installing an enclosure, it is advantageous to run the fibres of the incoming and outgoing cables into respective trays: a number of fibres are then coiled in each tray and remain stored in this manner until a splice is required to be made to them, at some subsequent time. Different fibres may be required for splicing at different times but remain stored in their respective trays meanwhile.

It will be appreciated that it is therefore desirable to be able, in an easy manner, to remove coiled fibres from their storage tray, when required, carry out the necessary splicing operation, then return the spliced fibres to the same or another tray within the enclosure. Typically fibres enter and leave their tray through a port in the form of a U-shaped channel, in which the fibres are retained by a cable tie passed around them and through apertures formed in side walls of the channel. The arrangement does not facilitate the easy removal and introduction of optical fibres relative to the tray.

In accordance with the present invention, there is provided a storage tray for an optical fibre cable joint enclosure, the tray having one or more ports for the entry into the tray of optical fibres, the or each said port being in the form of a U-shaped channel and being provided with a retaining member of resilient material which is formed with a through-passage to receive optical fibres, the retaining member being insertable into the or a said U-shaped channel as an interference fit.

It will be appreciated that each retaining member is easily inserted into the U-shaped channel via the open top of the latter and is correspondingly easy to remove. The arrangement accordingly facilitates the easy removal or introduction of optical fibres relative to the tray.

Preferably the retaining member is formed with ribs extending along opposite sides thereof, to engage against the opposite side walls of the U-shaped channel into which the retaining member is to be fitted.

Preferably the retaining member is formed with a longitudinal split, to enable fibres to be removed from or introduced into its through-passage by a sideways movement of the fibres, instead of threading them through the retaining member.

The passage through the retaining member may be generally circular in cross-section, suited to receive a single bundle of fibres contained within a cylindrical sleeve or tube. Instead, the passage through the retaining member may have a cross-section which is generally polygonal (particularly triangular, square, pentagonal or hexagonal) with rounder-off corners: the passage is then suited to receiving a corresponding plurality of bundles of fibres, each bundle within its own tube or sleeve.

The retaining member is particularly suited to receive one or more bundles of fibres having an outer tube or sleeve which is helically split, or even longitudinally split: because the fibre bundle is embraced substantially all around its periphery, the split sleeve or tube is held in a cylindrical configuration, instead of being opened out (which occurs when bound by a cable tie).

An embodiment of the present invention will now be described by way of example only and with reference to the accompanying drawings, in which:
FIGURE 1 is a plan view of a tray for an optical fibre cable joint enclosure; and
FIGURE 2 is an enlarged view of a retaining member to retain fibres in the entry ports of the tray shown in Figure 1.

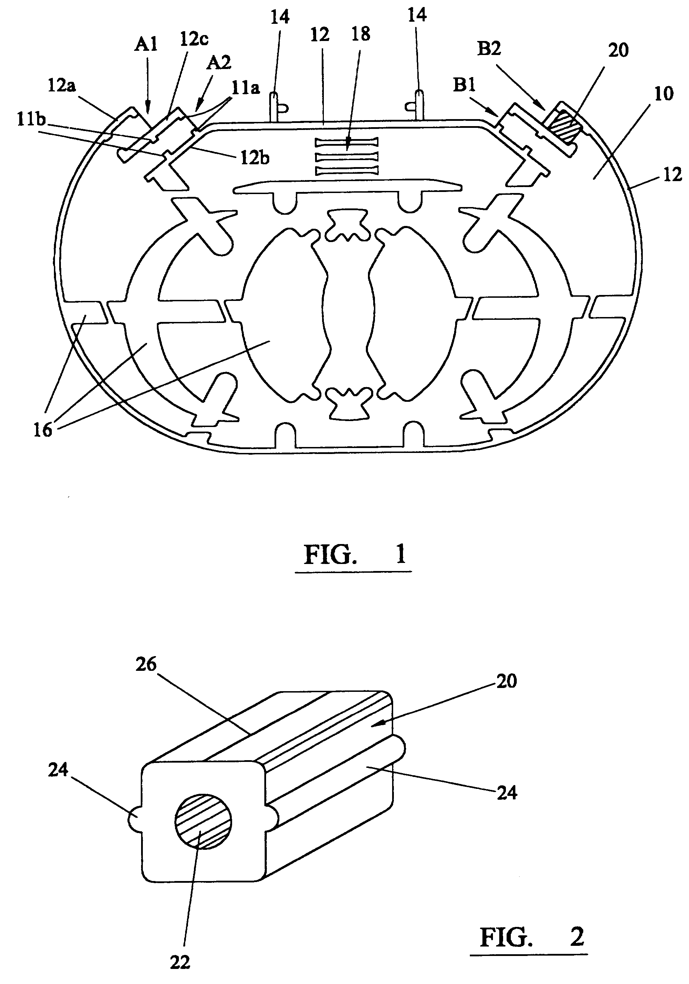

Referring to Figure 1, there is shown a tray for use in an optical fibre cable joint enclosure, the enclosure including a plurality of such trays. The tray comprises a generally flat base 10 on which a peripheral wall 12 stands. A pair of brackets 14 project from the peripheral wall 12, to one side of the tray, to provide for pivotal mounting of the tray to a support member within the enclosure. The tray which is shown is formed with two pairs of ports A1, A2 and B1, B2 for the entry of optical fibres into the tray. Each pair of ports, e.g. A1, A2, is formed by two parallel sections e.g. 12a, 12b of the peripheral wall 12 and by an intermediate section of wall 12c. Each port is accordingly in the form of a generally U-shaped channel. The opposite side walls of each such channel are formed with vertically-extending, spaced-apart pairs of ribs e.g. lla, llb for port A2.

The base 10 of the tray is also formed with a number of formations e.g. 16 which define various paths in which the optical fibres may be laid and retained within the tray. Thus, the fibres may be coiled loosely within the tray until required for splicing. Once splices are formed, these may be retained between splice-retaining ribs formed on the base 10, a series of such ribs being shown at 18.

For each fibre entry port, a retaining member 20 as shown in Figure 2 is provided, one such retaining member being shown fitted to port B2 in Figure 1. The retaining member 20 is formed of resilient plastics material and is in the form of a rectangular block having an axial through-bore 22. Two opposite sides of the retaining member 20 are formed with longitudinally-extending ribs 24. Further, another side of the retaining member is formed with a longitudinal split 26 which extends into the through-bore 22.

It will be appreciated that optical fibres can be introduced into the through-bore 22 of the retaining member either by threading them through the bore from one end, or by passing them sideways through the longitudinal slit 26. A bundle of fibres may be introduced into the retaining member: the bundle may for example be contained within a tube or sleeve; the bundle may have an outer, protective spiral binding.

The retaining member 20 is arranged to be inserted into any of the fibre entry ports, fitting between the opposed pairs of ribs e.g. lla, llb of the port and with its own ribs against the opposite side walls of the port. The retaining member 20 is inserted into the port through the open top of its U-shaped channel, bot be retained as an interference fit with the retaining member slightly compressed.

It will be appreciated that the use of the retaining members, as an interference fit into the fibre entry ports, facilitates the quick and easy introduction of fibres to, or removal of fibres from, the tray as and when required.

## Claims

1. A storage tray for an optical fibre cable joint enclosure, the tray having one or more ports for the entry into the tray of optical fibres, the or each said port being in the form of a U-shaped channel and being provided with a retaining member of resilient material which is formed with a through-passage to receive optical fibres, the retaining member being insertable into the or a said U-shaped channel as an interference fit.

2. A storage tray as claimed in claim 1, in which the retaining member is formed with ribs extending along opposite sides thereof, to engage against the opposite side walls of the U-shaped channel into which the retaining member is to be fitted.

3. A storage tray as claimed in claims 1 or 2, in which retaining member is formed with a longitudinal split, to enable fibres to be removed from or introduced into its through-passage by a sideways movement of the fibres.

4. A storage tray as claimed in any preceding claim, in which the retaining member is generally circular in cross-section.

5. A storage tray as claimed in any preceding claim, in which the passage through the retaining member may has a cross-section which is generally polygonal with rounded-off corners.
